# EUROPÄISCHE PATENTSCHRIFT

(11) **EP 3 853 061 B1**
(45) Veröffentlichungstag und Bekanntmachung des Hinweises auf die Patenterteilung: **03.08.2022**
(21) Anmeldenummer: 19765203.5
(22) Anmeldetag: 30.08.2019
(51) Int. Cl.: B60L 53/18, B60L 53/31, B67D 7/40, H02J 7/00

(54) **LADESTATION FÜR ELEKTROFAHRZEUGE**
CHARGING STATION FOR ELECTRIC VEHICLES
STATION DE CHARGE DE VÉHICULES ÉLECTRIQUES

(30) Priorität: 18.09.2018 DE 102018122828
(43) Veröffentlichungstag der Anmeldung: 28.07.2021
(73) Patentinhaber: Compleo Charging Solutions AG, 44309 Dortmund (DE)
(72) Erfinder: SIAENEN, Thorbjörn, 44287 Dortmund (DE); MÜLLER-WINTERBERG, Christian, 46282 Dorsten (DE); WAFFNER, Jürgen, 45307 Essen (DE)
(74) Vertreter: Gottschald Patentanwälte Partnerschaft mbB
(86) Internationale Anmeldenummer: PCT/EP2019/073221
(87) Internationale Veröffentlichungsnummer: WO 2020/057941

(56) Entgegenhaltungen:
- CN-Y- 201 181 832
- DE-A1-102016 014 896
- JP-A- S5 744 096
- JP-U- S5 744 096

## Beschreibung

Die Anmeldung betrifft eine Ladestation für Elektrofahrzeuge, umfassend eine Kabelhalteeinrichtung, eingerichtet zum Halten von zwei Ladekabeln. Darüber hinaus betrifft die Anmeldung eine Kabelhalteeinrichtung für eine Ladestation.

Um das Betreiben von Elektrofahrzeugen, insbesondere von elektrisch betriebenen Autos aber auch von anderen Fahrzeugen, zu fördern, wird die Verkehrsinfrastruktur vermehrt mit Ladestationen versehen. Bekannte Ladestationen können über mindestens eine Steckeraufnahme verfügen, in die ein Ladestecker eines Ladekabels von einem Nutzer eingesetzt werden kann.

Alternativ oder zusätzlich können Ladestationen über mindestens ein festangeschlagenes Ladekabel verfügen, welches einen (fest angeschlagenen) Ladeanschluss, insbesondere in Form eines Ladesteckers, aufweist. Der Ladeanschluss korrespondiert zu einem Ladeanschluss des Elektrofahrzeugs. Insbesondere kann ein Ladestecker in eine Steckeraufnahme des Elektrofahrzeugs eingesetzt werden. Der Ladestecker des Ladekabels kann vorzugsweise ein Ladestecker Typ 2 nach der Norm IEC 62196-2 sein. Es versteht sich, dass auch andere Ladeanschlüsse eingesetzt werden können.

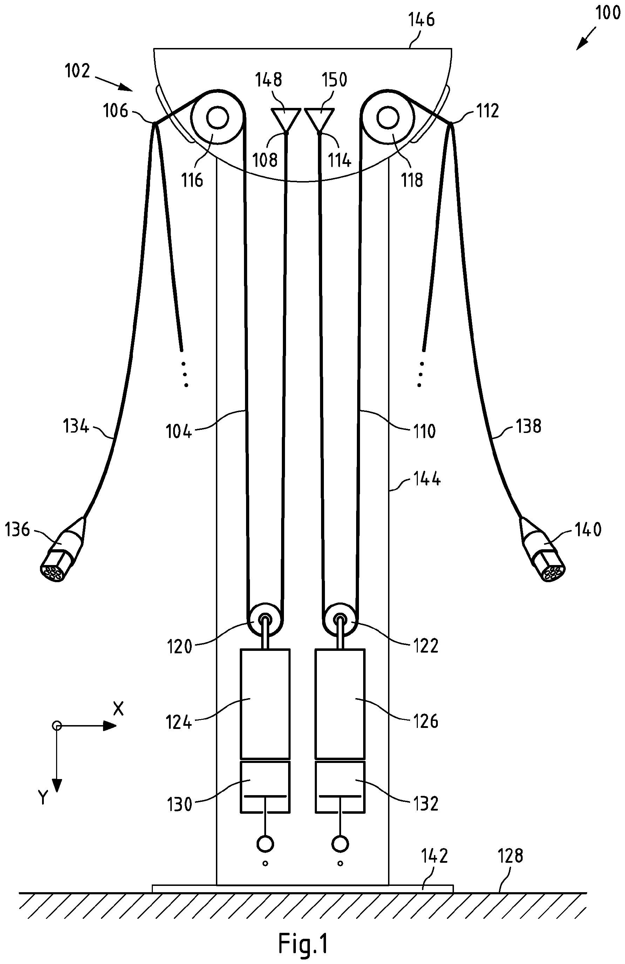

Die Figur 1 zeigt eine Ladestation 100 gemäß dem internen Stand der Technik. Die dargestellte Ladestation 100 weist eine auf einem Fundament 142 angeordnete (Lade-)Säule 144 mit einem (Ladesäulen-) Kopf 146 auf. Die dargestellte Ladestation 100 weist ein erstes Ladekabel 134 und ein weiteres Ladekabel 138 auf. Jedes Ladekabel 134, 138 weist ein freies Ende 136, 140 auf, das durch einen Ladeanschluss 136, 140 in Form eines Ladesteckers 136, 140 gebildet ist. Das jeweils andere Ende der Ladekabel 134, 138 kann mit einer (nicht gezeigten) Ladevorrichtung fest verbunden sein.

Die Ladevorrichtung kann in herkömmlicher Weise über Komponenten/Ladetechnik verfügen, um einen bestimmten Stromfluss von einer (nicht gezeigten) Stromquelle (z.B. ein öffentliches Stromnetz) über ein Ladekabel zu ermöglichen, um ein elektrisch betriebenes Fahrzeug bzw. dessen elektrischen Energiespeicher zu laden (oder entladen).

Darüber hinaus weist die Ladestation 100 eine Kabelhalteeinrichtung 102 auf. Die Kabelhalteeinrichtung 102 umfasst zwei Seile 104, 110, vier Umlenkeinrichtungen 116, 118, 120, 122 und zwei Gewichtselemente 124, 126. Je ein Gewichtselement 124, 126 für ein Seil 104, 110.

Wie ferner aus der Figur 1 zu erkennen ist, ist das erste Ende 106 des ersten Seils 104 mit dem ersten Ladekabel 134 verbunden und das weitere Ende 108 des ersten Seils 104 mit einer ersten Aufhängung 148, die insbesondere in dem Ladesäulenkopf 146 befestigt ist. In entsprechender Weise kann das erste Ende 112 des weiteren Seils 110 mit dem weiteren Ladekabel 138 verbunden sein und das weitere Ende 114 des weiteren Seils 110 mit einer weiteren Aufhängung 150, die insbesondere ebenfalls in dem Ladesäulenkopf 146 angeordnet ist.

Das erste Seil 104 wird durch eine erste Umlenkeinrichtung 116 in Richtung einer Bodenoberfläche 128 bzw. in Richtung des Fundaments 142 geführt und durch eine dritte Umlenkeinrichtung 120 in entgegengesetzter Richtung zur Aufhängung 148. Ein entsprechender Verlauf ist bei dem weiteren Seil 110 vorgesehen.

Darüber hinaus steht jedes Seil 104, 110 in Wirkverbindung mit jeweils mindestens einem Gewichtselement 124, 126. Insbesondere wird jedes Seil 104, 110 über das jeweilige Gewichtselement 124, 126 gespannt. Hierdurch wird erreicht, dass in einem unbenutzten Zustand eines Ladekabel 134, 138 dieses so gehalten wird, dass zwischen der Bodenoberfläche 128 und jedem Teil des Ladekabels 134, 138 ein bestimmter Abstand, insbesondere ein Mindestabstand, vorhanden ist. Dies ist insbesondere dann der Fall, wenn zwischen der Bodenoberfläche 128 und dem freien Ende 136, 140 des Ladekabels 134, 138, hier der Ladeanschluss 136, 140 (der in der Regel am Ende des Ladekabels 134, 138 angeschlagen ist) des Ladekabels 134, 138, ein bestimmter Abstand, insbesondere ein Mindestabstand, vorhanden ist.

Anders ausgedrückt sorgt die Kabelhalteeinrichtung 102 mit den zwei Seilen 104, 110 dafür, dass die zwei Ladekabel 134, 138 mit den Ladesteckern 136, 140 nicht auf dem Boden liegen, wenn kein Fahrzeug angeschlossen ist. Zudem sorgt die Kabelhalteeinrichtung 102 dafür, dass auch in einem angeschlossenen, also benutzten Zustand des Ladekabels, also bei einer Kopplung des Ladesteckers 136, 140 mit einer (nicht gezeigten) Steckeraufnahme eines Fahrzeugs, ein Abstand zwischen der Bodenoberfläche 128 und jedem Teil des Ladekabels 134, 138 vorhanden ist.

Um einen Ladestecker 136, 140 mit einer (nicht gezeigten) Steckeraufnahme eines Fahrzeugs zu verbinden, kann das Seil von einem Nutzer während einem benutzten Zustand zumindest teilweise herausgezogen sein/werden.

Aus Sicherheitsgründen und zur Beschränkung des Wegs in vertikaler Richtung ist zudem für jedes Gewichtselement 124, 126 ein zugeordnetes Anschlagselement 130, 132 angeordnet. In der Regel ist zudem zwischen den beiden Gewichtselementen 124, 126 eine (nicht dargestellte) Trennwand vorgesehen, um eine Kollision der beiden Gewichtselementen 124, 126 während des Betriebs zu verhindern.

Nachteilig an einer derartigen bekannten Ladestation ist, dass die Kabelhalteeinrichtung aufwendig ausgebildet ist. Es sind eine Vielzahl von Komponenten (Seile, Gewichte, Aufhängungen, Anschlagselemente, Trennwand etc.) erforderlich. Mit dem erhöhten Aufwand einer entsprechenden Kabelhalteeinrichtung zum Halten zweier Ladekabel gehen entsprechend erhöhte Kosten einher.

Ferner ist aus der Druckschrift JPS 5744096 U eine Zapfsäule mit zwei Schläuchen offenbart, wobei jeder Schlauch über ein Seil gehalten ist, das mit einem Gewichtselement verbunden ist.

DE102016014896 A1 offenbart eine Ladestation bei der ein Ladekabel wie bei einem Seilzug mit loser Rolle zwischen der Leistungselektronik und seinem Stecker über wenigstens eine bewegliche Umlenkrolle geführt wird, welche das Ladekabel an einem Umschlingungspunkt mit einem Gewicht nach unten zieht. Wird das Ladekabel aus der Ladesäule gezogen, bewegt sich das Gewicht mit der Umlenkrolle nach oben, wobei das Ladekabel an der Umlenkrolle abrollt. Lässt die Zugkraft auf das Ladekabel nach Gebrauch nach, zieht das Gewicht das Ladekabel nach unten, wodurch es an der Umlenkrolle abrollt und in die Ladesäule gezogen wird.

CN201181832 Y offenbart eine elektrische Ladeeinrichtung bei der das Ladekabel über eine Umlenkeinrichtung mit einem Gewichtselement eingezogen werden kann. Ein Fixpunkt der des Flaschenzuges ist an der Innenseite des Kabelgehäuses angebracht. Die Einrichtung erlaubt es einem Arbeitsfahrzeug in einem bestimmen Radius um die Ladestation zu operieren, wobei das Ladekabel durch den Zug der Arbeitsmachine ausgerollt wird und durch den Flaschenzug automatisch wieder eingezogen wird.

Daher liegt der Anmeldung die Aufgabe zugrunde, eine Ladestation mit einer Kabelhalteeinrichtung zur Verfügung zu stellen, die in einfacherer Weise ein Halten zweier Ladekabel ermöglicht.

Die Aufgabe wird gemäß einem ersten Aspekt der Anmeldung durch eine Ladestation für Elektrofahrzeuge nach Anspruch 1 gelöst. Die abhängigen Ansprüche stellen Ausführungsformen der Erfindung dar. Die Ladestation umfasst eine Kabelhalteeinrichtung mit einem über ein erstes Umlenkeinrichtung und ein zweites Umlenkeinrichtung geführtes Seil mit zwei Enden zum Halten von zwei Ladekabeln. Das erste Ende des Seils ist mit einem ersten Ladekabel der Ladestation verbunden und das weitere Ende des Seils ist mit einem weiteren Ladekabel der Ladestation verbunden. Die Ladestation umfasst mindestens ein mit dem Seil derart in Wirkverbindung stehendes Gewichtselement, dass die Ladekabel in einem unbenutzten Zustand der Ladekabel so gehalten werden, dass zwischen einer Bodenoberfläche und jedem Teil der Ladekabel ein Abstand vorhanden ist.

Im Gegensatz zum Stand der Technik ist anmeldungsgemäß zum Halten von zwei Ladekabeln nur ein einzelnes Seil mit einem einzelnen Gewichtselement vorgesehen. Anders ausgedrückt ist anmeldungsgemäß vorgesehen, dass die beiden Seile aus dem Stand der Technik eins werden und dass nur ein Gewichtselement an diesem Seil hängt. Ein zweites Seil, Aufhängungen für zwei Seile und ein zweites Gewichtselement können entfallen. Ein Halten zweier Ladekabeln einer Ladestation wird in einfacherer Weise und insbesondere kostengünstiger Weise ermöglicht. Ein weiterer wesentlicher Vorteil der anmeldungsgemäßen Ladestation ist, dass eine Kollision von zwei Gewichtselementen nicht über eine Trennwand oder dergleichen verhindert werden muss.

Die anmeldungsgemäße Ladestation umfasst mindestens zwei Ladekabel. Es versteht sich, dass die Ladestation drei oder mehr Ladekabel und beispielsweise zwei anmeldungsgemäße Kabelhalteeinrichtungen umfassen kann. Vorzugsweise sind das erste Ladekabel und das weitere Ladekabel fest mit einer Ladevorrichtung der Ladestation verbunden sein. Unter einer festen Verbindung ist insbesondere zu verstehen, dass ein Nutzer das Ladekabel nicht zerstörungsfrei von der Ladevorrichtung trennen kann.

Die Ladevorrichtung kann in herkömmlicher Weise über Komponenten verfügen, um einen bestimmten Stromfluss von einer Stromquelle (z.B. ein öffentliches Stromnetz, Energieerzeuger etc.) über das Ladekabel zu ermöglichen, um ein elektrisch betriebenes Fahrzeug bzw. dessen elektrischen Energiespeicher zu laden. Die Ladevorrichtung kann in einer Ladesäule integriert oder als "Wallbox" gebildet sein. Insbesondere kann die Ladevorrichtung ein Teil der Ladestation sein. Auch kann die Ladevorrichtung, insbesondere die Komponenten bzw. die Ladetechnik, in einer Wand oder einem Boden integriert sein. Es versteht sich, dass eine bidirektionale Strom- bzw. Leistungsübertragung über die Ladekabel und die Ladetechnik der Ladevorrichtung erfolgen kann.

Die Ladestation verfügt über mindestens eine Kabelhalteeinrichtung. Die Kabelhalteeinrichtung ist zumindest gebildet aus einem Seil und einer ersten Umlenkeinrichtung und einer zweiten Umlenkeinrichtung. Unter einer Umlenkeinrichtung ist insbesondere eine Einrichtung zu verstehen, die das Seil führt und von einer ersten Richtung in eine andere Richtung, die sich von der ersten Richtung unterscheidet, umlenkt. Vorzugsweise kann eine Umlenkeinrichtung eine Umlenkrolle sein.

Das erste Ende des Seils ist (unmittelbar oder mittelbar) mit dem ersten Ladekabel verbunden, um das erste Ladekabel zu halten. Im Gegensatz zum Stand der Technik ist das weitere Ende des Seils nicht mit einer Aufhängung verbunden, sondern (unmittelbar oder mittelbar) mit dem weiteren Ladekabel verbunden, um insbesondere das weitere Ladekabel zu halten. Mit anderen Worten werden zwei Ladekabel anmeldungsgemäß mit dem gleichen Seil gehalten.

Die Kabelhalteeinrichtung ist insbesondere eingerichtet, die zwei Ladekabel jeweils an einem Aufhängungspunkt (in einem unbenutzten Zustand des Ladekabels) zu halten. Unter einem Aufhängungspunkt ist insbesondere der Verbindungspunkt zu verstehen, an dem ein Ladekabel mit einem Ende des Seils verbunden ist. Es versteht sich, dass bei Varianten der Anmeldung mindestens ein Zwischenstück vorgesehen sein kann, um ein Ende des Seils mit einem Ladekabel zu verbinden bzw. das Ende des Seils an dem Ladekabel zu befestigen. In diesem Fall ist unter einem Aufhängungspunkt insbesondere der Verbindungspunkt zu verstehen, an dem ein Ladekabel mit einem Ende des Zwischenstücks verbunden ist.

Hierbei ist vorzugsweise vorgesehen, dass die Kabelhalteeinrichtung derart gebildet ist, dass der Abstand zwischen einem Aufhängungspunkt zu einer Bodenoberfläche (in einem unbenutzten Zustand des entsprechenden Ladekabels) vorhanden ist, der zumindest größer ist als der Abstand eines elektrischen Ladeanschlusses eines zu ladenden Elektrofahrzeugs zu der (Bezugs-)Bodenoberfläche. Die Bodenoberfläche kann insbesondere eine Fläche sein, auf der ein zu ladendes Elektrofahrzeug angeordnet ist, um dieses zu laden. Vorzugsweise beträgt der Abstand zwischen einem Aufhängungspunkt und der Bodenoberfläche (in einem unbenutzten Zustand des entsprechenden Ladekabels) zumindest 1,5 m, vorzugsweise zwischen 2 m und 3,5m.

Um in einem unbenutzten Zustand bzw. einem unausgezogenen Zustand (wenn als das Seil nicht ausgezogen ist) eines Ladekabels dieses so zu halten, dass ein Abstand zwischen dem Ladekabel, insbesondere dem freien Ende des Ladekabels, und einer Bodenoberfläche vorhanden ist, verfügt die Kabelhalteeinrichtung über ein (einzelnes) Gewichtselement. Das Gewichtselement kann einstückig gebildet oder aus einer Mehrzahl von Gewichtsmodulen zusammengesetzt sein. Das Gewichtselement ist eingerichtet, das Seil zu spannen. Insbesondere weist das Gewichtselement eine Wirkverbindung mit dem Seil auf, derart, dass das Seil gespannt wird, so dass das erste Ladekabel in einem unbenutzten Zustand des ersten Ladekabels und das zweite Ladekabel in einem unbenutzten Zustand des zweiten Ladekabels so gehalten werden, dass zwischen einer Bodenoberfläche und jedem Teil (Kabel, Ladeanschluss, Haltegriff etc.) des jeweiligen Ladekabels, insbesondere dem jeweils freien Ende der Ladekabel, (stets) ein (bestimmter) Abstand vorhanden ist. Anders ausgedrückt kann durch die anmeldungsgemäße Wirkverbindung zwischen Seil und Gewichtselement sichergestellt werden, dass die Ladekabel die Bodenoberfläche (z.B. Straßen- oder Parkplatzoberfläche) in einem unbenutzten (und insbesondere auch in einem benutzten) Zustand nicht berühren. Zwischen dem Punkt des Ladekabels, der in einem unbenutzten Zustand der Bodenfläche am nächsten ist (insbesondere das freie Ende des Ladekabels) und der Bodenfläche kann durch die anmeldungsgemäße Wirkverbindung insbesondere ein Mindestabstand stets sichergstellt sein.

Neben einer verbesserten Handhabung durch den Nutzer wird erreicht, dass eine Beschädigung und/oder Verschmutzung des Ladekabels aufgrund einer Bodenoberflächenberührung vermieden wird. Zudem wird hierdurch ermöglicht, dass das Ladekabel von oben dem Ladestecker zugeführt werden kann, ohne dass eine Verbiegung des Ladekabels erforderlich ist.

Zusätzlich kann die Kabelhalteeinrichtung optional ein Anschlagselement aufweisen, um den Weg des Gewichtselements in Richtung des Fundaments zu begrenzen. Das Anschlagselement kann insbesondere ein Dämpfungselement sein, um impulsartige Belastungen zu verringern.

Ein Ladekabel der anmeldungsgemäßen Ladestation kann einen Durchmesser zwischen 20 mm und 80 mm aufweisen, vorzugweise zwischen 40 mm und 60 mm. Der größere Querschnitt ermöglicht hierbei die Übertragung von größeren Ladeströmen (zwischen 0 A und 500 A) bzw. größeren Leistungen (zwischen 20 kW und 500 kW (bei einem Durchmesser bis zu 60 mm).

Das freie Ende eines Ladekabels wird insbesondere durch einen Ladeanschluss gebildet, der zu einem Ladeanschluss eines Elektrofahrzeugs korrespondiert. Der Ladeanschluss des Ladekabels kann vorzugsweise ein Ladestecker sein, insbesondere ein Ladestecker Typ 2 nach der Norm IEC 62196-2.

Gemäß einer ersten Ausführungsform der anmeldungsgemäßen Ladestation kann die Kabelhalteeinrichtung eine Galgenhalteeinrichtung sein. Eine Galgenhalteeinrichtung bzw. Galgenaufhängung stellt eine sichere Aufhängung für die zwei Ladekabel zur Verfügung. Gleichzeitig kann eine einfache Bedienbarkeit und Beweglichkeit des Ladekabels bereitgestellt werden. Hierdurch ist insbesondere eine benutzerfreundliche Einsetzung eines Ladesteckers in eine Steckeraufnahme eines Fahrzeugs gewährleistet.

Darüber hinaus kann das Seil, gemäß einer bevorzugten Ausführungsform der anmeldungsgemäßen Ladestation, über mindestens eine dritte zwischen der ersten Umlenkeinrichtung und der zweiten Umlenkeinrichtung angeordnete Umlenkeinrichtung geführt sein. An der dritten Umlenkeinrichtung kann das Gewichtselement befestigt sein. Vorzugsweise kann die dritte Umlenkeinrichtung eine Umlenkrolle sein, an der (über ein Verbindungselement) das Gewichtselement zum Spannen des Seils befestigt sein kann. In einfacher Weise kann eine Wirkverbindung zwischen dem Seil und dem Gewichtselement bereitgestellt werden.

Vorzugsweise kann die mindestens eine dritte Umlenkeinrichtung von der ersten Umlenkeinrichtung und von der zweiten Umlenkeinrichtung vertikal beabstandet sein. Insbesondere kann der Abstand zwischen der Bodenoberfläche bzw. dem Fundament und der dritten Umlenkeinrichtung geringer sein als der Abstand zwischen der Bodenoberfläche bzw. dem Fundament und der ersten Umlenkeinrichtung sowie der Abstand zwischen der Bodenoberfläche bzw. dem Fundament der zweiten Umlenkeinrichtung.

Gemäß einer weiteren Ausführungsform der vorliegenden Ladestation kann das Seil von dem ersten Ende (des Seils) über die erste Umlenkeinrichtung, die dritte Umlenkeinrichtung und die zweite Umlenkeinrichtung zu dem weiteren Ende (des Seils) verlaufen. Insbesondere kann das Seil über die erste Umlenkeinrichtung und die zweite Umlenkeinrichtung jeweils in Richtung der Bodenoberfläche bzw. des Fundaments geführt sein.

Um insbesondere die ausziehbare Länge eines Ladekabels zu vergrößern, kann gemäß einer bevorzugten Ausführungsform der anmeldungsgemäßen Ladestation mindestens eine weitere dritte Umlenkeinrichtung und mindestens eine vierte Umlenkeinrichtung für mindestens eine weitere Umlenkung des Seils vorgesehen sein. Die vierte Umlenkeinrichtung kann von den dritten Umlenkeinrichtungen vertikal beabstandet sein. Insbesondere kann der Abstand zwischen der Bodenoberfläche bzw. dem Fundament und der weiteren dritten Umlenkeinrichtung geringer sein als der Abstand zwischen der Bodenoberfläche bzw. dem Fundament und der vierten Umlenkeinrichtung.

Das Seil und die mindestens zwei Umlenkeinrichtungen, vorzugsweise mindestens drei Umlenkeinrichtungen, sind insbesondere derart angeordnet, dass ein Flaschenzugsystem gebildet wird.

Gemäß einer weiteren Ausführungsform der anmeldungsgemäßen Ladestation kann die Ladestation ein Fundament (bzw. einen Standfuß), eine auf dem Fundament angeordnete (Lade-)Säule (bzw. Gehäuse) und einen auf der Säule angeordneten (Säulen-) Kopf (bzw. Säulendeckel) umfassen. Die erste Umlenkeinrichtung und/oder die zweite Umlenkeinrichtung kann/können vorzugsweise in dem Säulenkopf angeordnet sein. Das Seil kann über zwei Öffnungen in dem Säulenkopf herausgeführt sein. Vorzugsweise kann auch eine optionale vierte Umlenkeinrichtung in dem Säulenkopf angeordnet sein.

Die mindestens eine dritte Umlenkeinrichtung kann in der Säule angeordnet sein, vorzugsweise in der unteren Hälfte der Säule, insbesondere bevorzugt in einem unteren Drittel der Säule (von der Bodenoberfläche bzw. dem Fundament aus gesehen).

Ferner ist erkannt worden, dass vorzugsweise das Gewichtselement zumindest in Abhängigkeit der Anzahl von Umlenkeinrichtungen dimensioniert sein kann, wobei insbesondere das Gewichtselement umso schwerer ist desto größer die Anzahl von Umlenkeinrichtungen ist. Hierdurch kann stets eine ausreichende Spannung für das Seil bereitgestellt werden.

Wie bereits beschrieben wurde, ist unter einem unbenutzten Zustand eines Ladekabels insbesondere zu verstehen, dass keine externe Kraft (beispielsweise durch einen Nutzer oder aufgrund einer Kopplung des Ladeanschlusses des Ladekabels mit einem Ladeanschluss eins Fahrzeugs) auf das Ladekabel in diesem Zustand ausgeübt wird. Gemäß einer weiteren Ausführungsform der anmeldungsgemäßen Ladestation kann in einem benutzten Zustand eines Ladekabels das Seil zumindest teilweise derart ausgezogen sein, dass ein Ladeanschluss eines Ladekabels mit einem weiteren Ladeanschluss des zu ladenden Elektrofahrzeugs verbunden sein kann. Insbesondere kann ein Ladekabel von einem Nutzer herausgezogen bzw. herangezogen werden. Ein weiterer Aspekt der Anmeldung ist eine Kabelhalteeinrichtung für eine Ladestation, insbesondere eine zuvor beschriebene Ladestation, wobei die Kabelhalteeinrichtung zum Halten von zwei Ladekabeln der Ladestation eingerichtet ist. Die Kabelhalteeinrichtung umfasst ein über eine erste Umlenkeinrichtung und eine zweite Umlenkeinrichtung geführtes Seil mit zwei Enden zum Halten der zwei Ladekabel. Das erste Ende des Seils ist mit einem ersten Ladekabel der Ladestation verbindbar und das weitere Ende des Seils ist mit einem weiteren Ladekabel der Ladestation verbindbar. Die Kabelhalteeinrichtung umfasst mindestens ein mit dem Seil derart in Wirkverbindung stehendes Gewichtselement, dass die Ladekabel in einem unbenutzten Zustand der Ladekabel so gehalten werden, dass zwischen einer Bodenoberfläche und jedem Teil der Ladekabel ein Abstand vorhanden ist.

Die Kabelhalteeinrichtung kann insbesondere zusammen mit einer Ladestation verwendet werden, wobei die Ladestation über zwei zu haltende Ladekabel und eine zuvor beschriebene Ladevorrichtung verfügen kann.

Die Merkmale der Ladestation und Kabelhalteeinrichtung sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Ladestation und die anmeldungsbedingte Kabelhalteeinrichtung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht einer Ladestation gemäß einem internen Stand der Technik,
- Fig. 2: eine schematische Ansicht eines Ausführungsbeispiels einer Ladestation gemäß der vorliegenden Anmeldung mit einem Ausführungsbeispiel einer Kabelhalteeinrichtung gemäß der vorliegenden Anmeldung, und
- Fig. 3: eine schematische Ansicht eines weiteren Ausführungsbeispiels einer Ladestation gemäß der vorliegenden Anmeldung mit einem Ausführungsbeispiel einer Kabelhalteeinrichtung gemäß der vorliegenden Anmeldung.

In den Figuren werden für gleiche Elemente gleiche Bezugszeichen verwendet.

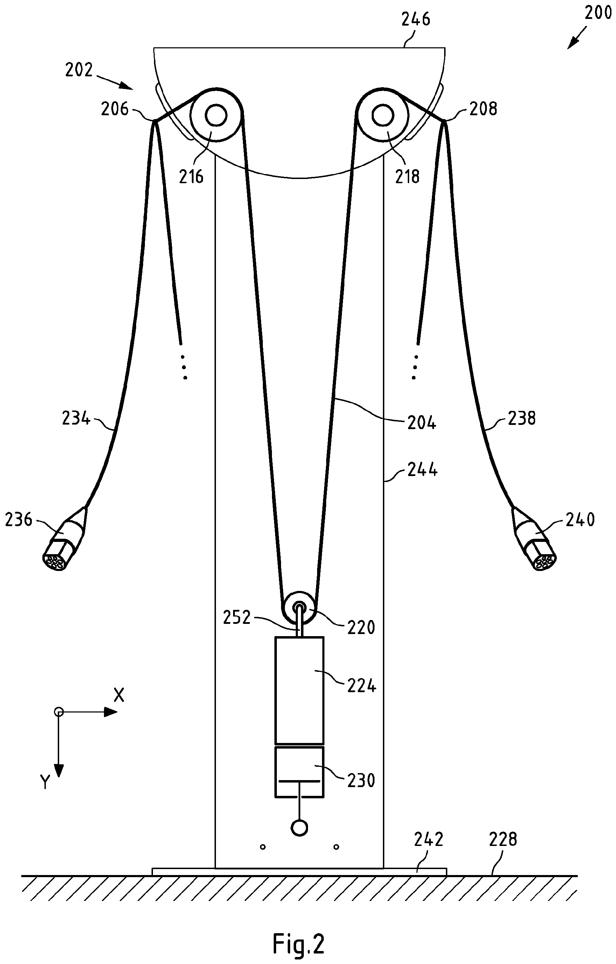

Die Figur 2 zeigt eine schematische Ansicht eines Ausführungsbeispiels einer Ladestation 200 gemäß der vorliegenden Anmeldung. Die Ladestation 200 umfasst ein Ausführungsbeispiel einer Kabelhalteeinrichtung 202 gemäß der vorliegenden Anmeldung.

Die Kabelhalteeinrichtung 202 ist zum Halten von zwei Ladekabeln 234, 238 eingerichtet. Die anmeldungsgemäße Kabelhalteeinrichtung 202 zeichnet sich dadurch aus, dass im Gegensatz zum Stand der Technik nur ein Seil 204 und ein Gewichtselement 224 zum Halten von zwei Ladekabeln 234, 238 eingesetzt werden.

Die dargestellte Ladestation 200 umfasst insbesondere ein sich in horizontaler Ebene (entlang der x-Achse) erstreckendes Fundament 242. Auf dem Fundament 242 ist eine sich in vertikaler Richtung (y-Achse) erstreckende Säule 244 angeordnet, die mit einem Säulenkopf 246 abschließt. Vorzugsweise innerhalb der Säule 244 kann eine (nicht gezeigte) Ladevorrichtung angeordnet sein, mit der die (schematisch dargestellten) Ladekabel 234, 238 fest verbunden sein können.

Die Ladevorrichtung kann elektrisch an eine (nicht gezeigte) Stromquelle, insbesondere ein öffentliches Stromnetz, angeschlossen sein. Die Ladevorrichtung kann Komponenten, insbesondere Ladetechnik (z.B. elektrische Schalter, elektrische Sicherheitseinrichtungen, elektrische Messeinrichtungen, Steuereinrichtungen etc.), umfassen, um insbesondere ein Laden von (nicht gezeigten) elektrisch betriebenen Fahrzeugen, insbesondere der elektrischen Energiespeicher der Elektrofahrzeuge, zu ermöglichen.

Die Kabelhalteeinrichtung 202 ist insbesondere als Galgenkabelhalteeinrichtung 202 gebildet, um die Ladekabel 234, 238 zu halten. Wie aus der Figur 2 zu erkennen, ist das Seil 204 mit seinem ersten Ende 206 vorliegend unmittelbar mit dem ersten Ladekabel 234 verbunden. Das Seil 204 ist, von seinem ersten Ende 206 aus gesehen, über die erste Umlenkeinrichtung 216 in Richtung der Bodenoberfläche 228 bzw. des Fundaments 242 geführt bis zu einer dritten Umlenkeinrichtung 220, die das Seil umlenkt und in Richtung des Kopfes 246 zu der zweiten Umlenkeinrichtung 218 führt. Das weitere Ende 208 des Seils 204 ist hierbei mit dem weiteren Ladekabel 238 (unmittelbar) verbunden. Es kann auch eine mittelbare Verbindung vorgesehen sein.

Die Umlenkeinrichtungen 216, 218, 220 sind vorliegend als Umlenkrollen 216, 218, 220 gebildet. Die erste Umlenkeinrichtung 216 und die zweite Umlenkeinrichtung 218 sind vorliegend in der gleichen horizontalen Ebene angeordnet und befinden sich insbesondere in dem Säulenkopf 246. Über Öffnungen kann das Seil 204 aus dem Kopf 246 hinausgeführt sein.

Die dargestellte dritte Umlenkeinrichtung 220 ist in der unteren Hälfte der Säule 244 (in dem dargestellten unbenutzten Zustand bzw. unausgezogenen Zustand der Ladekabel 234, 238) angeordnet. Bei einem Ausziehen des Seils 204 während eines benutzten Zustands bzw. eines ausgezogenen Zustands bewegt sich die dritte Umlenkeinrichtung 220 in Richtung des Säulenkopfes 246.

Ferner umfasst die Kabelhalteeinrichtung 202 ein Gewichtselement 224, das mit dem Seil 204 über die dritte Umlenkeinrichtung 220 verbunden ist, also mit dem Seil 204 in Wirkverbindung steht. Das Gewichtselement 224 steht mit dem Seil 204 derart in Wirkverbindung, dass die Ladekabel 234, 238 in einem unbenutzten (und in einem benutzten) Zustand der Ladekabel 234, 238 so gehalten werden, dass zwischen der Bodenoberfläche 228 und jedem Teil der Ladekabel 234, 238 (stets) ein Abstand vorhanden ist. Insbesondere ist vorliegend zwischen dem jeweiligen freien Ende 236, 240 der Ladekabel und der Bodenoberfläche 228 ein Abstand vorhanden.

Um den Weg des Gewichtselements 224 in Richtung der Bodenoberfläche 228 zu begrenzen, ist optional ein Anschlagselement 230 vorgesehen. Vorzugsweise kann das Anschlagselement 230 als Dämpfungselement 230 gebildet sein. Dies sorgt im vorliegenden Ausführungsbeispiel dafür, dass in einem unbenutzten Zustand die Ladekabel 234, 238 einen definierten Zustand einnehmen, in dem die Ladekabel 234, 238 die Bodenoberfläche 228 nicht berühren. Es versteht sich, dass bei anderen Varianten der Anmeldung auf ein Anschlagselement 230 auch verzichtet werden kann, wenn das Gewichtselement 224 sowie die Ladekabel 234, 238 entsprechend austariert sind.

Das Gewichtselement 224, das vorzugsweise einteilig gebildet ist, jedoch auch aus einer Mehrzahl von Gewichtsmodulen zusammengesetzt sein kann (beispielsweise für eine optimale Dimensionierung des Gewichtselements 224), ist insbesondere über ein Verbindungselement 252 mit der dritten Umlenkeinrichtung 220 verbunden.

Anders ausgedrückt ist das Seil 204 mit seinen beiden Enden 206, 208 an je einem Ladekabel 234, 238 befestigt. Über je eine Umlenkeinrichtung 216, 218 wird das Seil nach 204 unten geführt und ist über eine dritte Umlenkeinrichtung 220 mit einem Gewicht 224 verbunden. Insbesondere wird hierdurch ein Flaschenzugsystem bereitgestellt.

Wesentlicher Vorteil ist, dass eine Kollision von zwei Gewichten nicht über eine Trennwand verhindert werden muss und auf eine Vielzahl weiterer Komponenten verzichtet werden kann.

Es kann bei Varianten der Anmeldung dazu kommen, dass beispielsweise die linke Seilseite nur dann maximal herausgezogen werden kann, wenn die rechte Seilseite gar nicht herausgezogen ist. Jedoch kann die ausziehbare Länge durch eine entsprechende Dimensionierung der Kabelhalteeinrichtung 202 so angepasst sein, dass für den Nutzer ein nutzerfreundliches Anschließen von beiden Ladekabeln 234, 238 auch dann möglich ist, wenn sich beide Ladekabel 234, 238 in einem benutzten und insbesondere zumindest teilweise ausgezogenen Zustand befinden.

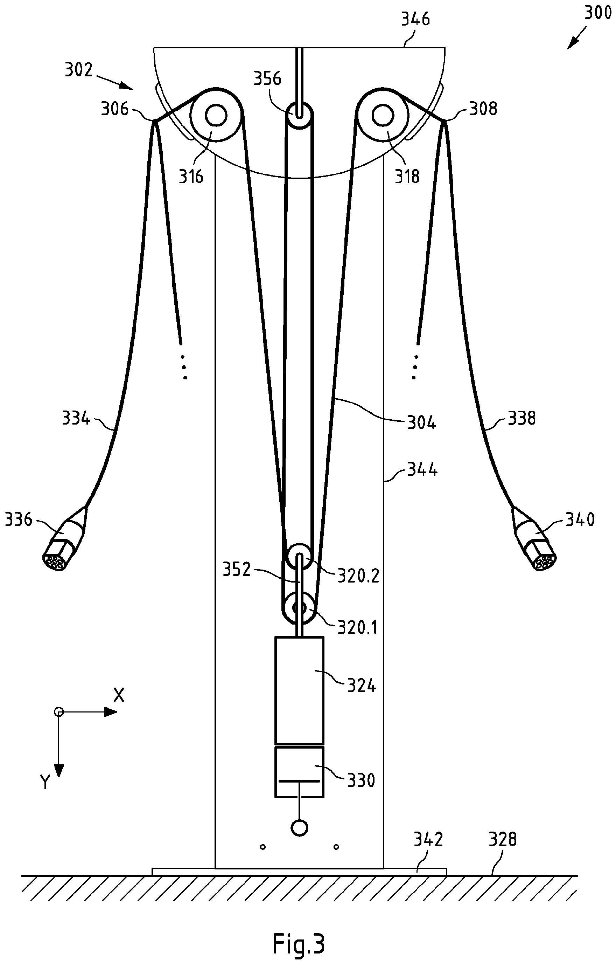

Die Figur 3 zeigt eine schematische Ansicht eines weiteren Ausführungsbeispiels einer Ladestation 300 gemäß der vorliegenden Anmeldung. Zur Vermeidung von Wiederholungen werden im Wesentlichen nachfolgend nur die Unterschiede zu dem Ausführungsbeispiel der Ladestation 200 nach Figur 2 erläutert. Ansonsten wird auf die obigen Ausführungen verwiesen.

Wie insbesondere aus der Figur 3 zu erkennen ist, weist das dargestellte Ausführungsbeispiel der Kabelhalteeinrichtung 302 eine erste dritte Umlenkeinrichtung 320.1, eine weiteren dritte Umlenkeinrichtung 320.2 und eine vierte Umlenkeinrichtung 356 auf. Die vierte Umlenkeinrichtung 356 ist vorliegend in dem Kopf 346 der Ladestation 300 angeordnet, während die dritten Umlenkeinrichtungen 320.1, 320.2 in der Säule 344 der Ladestation 300 positioniert sind, insbesondere in der unteren Hälfte der Säule 344.

Das Seil 304 verläuft, von seinem ersten Ende 306 aus gesehen, über die erste Umlenkeinrichtung 316 nach unten in Richtung Fundament 342 zur weiteren dritten Umlenkeinrichtung 320.2. Von dieser weiteren dritten Umlenkeinrichtung 320.2 verläuft das Seil 304 in Richtung Kopf 346 zur vierten Umlenkeinrichtung 356. Von dieser verläuft das Seil 304 in Richtung nach unten in Richtung Fundament zur ersten dritten Umlenkeinrichtung 320.1 und von dieser in Richtung Kopf 346 zur zweiten Umlenkeinrichtung 318 und zum weiteren Ladekabel 338.

Die vorliegende Ausgestaltung der Ladestation hat den Vorteil, dass durch die größere Anzahl von Umlenkeinrichtungen 316, 318, 320.1, 320.2, 356 ein längeres Seil 304 (im Vergleich zum Seil 204, also bei angenommenen gleichen Dimensionen der Säule 244 und 344) verwendet werden kann. Hierdurch kann die maximale Ausziehweite (im Vergleich zum Ausführungsbeispiel nach Figur 2) vergrößert werden.

Das Gewicht des Gewichtselement 324 kann dafür aber schwerer dimensioniert sein (im Vergleich zum Ausführungsbeispiel nach Figur 2). Das so gebildete Flaschenzugsystem kann, bei anderen Varianten der Anmeldung, durch noch weitere (dritte und vierte) Umlenkeinrichtungen erweitert werden, dass die maximale Auszugslänge eines Seils noch weiter vergrößert wird.

## Patentansprüche

1. Ladestation (200, 300) für Elektrofahrzeuge, umfassend:
- eine Kabelhalteeinrichtung (202, 302) mit einem über eine erste Umlenkeinrichtung (216, 316) und eine zweite Umlenkeinrichtung (218, 318) geführtes Seil (204, 304)
- **dadurch gekennzeichnet, dass** zwei Ladekabel (234, 238, 334, 338) von den zwei Enden (206, 208, 306, 308) des Seils gehalten werden, wobei das erste Ende (206, 306) des Seils (204, 304) mit einem ersten Ladekabel (234, 334) der Ladestation (200, 300) verbunden ist und das weitere Ende (208, 308) des Seils (204, 304) mit einem weiteren Ladekabel (238, 338) der Ladestation (200, 300) verbunden ist, und
- ein mit dem Seil (204, 304) derart in Wirkverbindung stehendes Gewichtselement (224, 324), dass die Ladekabel (234, 238, 334, 338) in einem unbenutzten Zustand der Ladekabel (234, 238, 334, 338) so gehalten werden, dass zwischen einer Bodenoberfläche (228, 328) und jedem Teil der Ladekabel (234, 238, 334, 338) ein Abstand vorhanden ist,
- wobei das Seil (204, 304) über mindestens eine dritte zwischen der ersten Umlenkeinrichtung (216, 316) und der zweiten Umlenkeinrichtung (218, 318) angeordnete Umlenkeinrichtung (220, 320) geführt ist,
- wobei an der dritten Umlenkeinrichtung (220, 320) das mindestens eine Gewichtselement (224, 324) befestigt ist.

2. Ladestation (200, 300) nach Anspruch 1, **dadurch gekennzeichnet, dass**
- das Seil (204, 304) von dem ersten Ende (206, 306) über die erste Umlenkeinrichtung (216, 316), die dritte Umlenkeinrichtung (220, 320.1, 320.2) und die zweite Umlenkeinrichtung (218, 318) zu dem weiteren Ende (208, 308) verläuft,
- wobei insbesondere das Seil (204, 304) über die erste Umlenkeinrichtung (216, 316) und die zweite Umlenkeinrichtung (218, 318) jeweils in Richtung der Bodenoberfläche (228, 328) geführt ist.

3. Ladestation (200, 300) nach Anspruch 1 oder 2, **dadurch gekennzeichnet, dass**
- mindestens eine weitere dritte Umlenkeinrichtung (320.1, 320.2) und mindestens eine vierte Umlenkeinrichtung (356) für mindestens eine weitere Umlenkung des Seils (204, 304) vorgesehen ist,
- wobei die vierte Umlenkeinrichtung (356) von den dritten Umlenkeinrichtungen (320.1, 320.2) vertikal beabstandet ist.

4. Ladestation (200, 300) nach einem der vorherigen Ansprüche, **dadurch gekennzeichnet, dass** das Seil (204, 304) und die mindestens zwei Umlenkeinrichtungen (216, 218, 220, 316, 318, 320.1, 320.2, 356) ein Flaschenzugsystem bilden.

5. Ladestation (200, 300) nach einem der vorherigen Ansprüche, **dadurch gekennzeichnet, dass**
- die Ladestation (200, 300) ein Fundament (242, 342), eine auf dem Fundament (242, 342) angeordnete Säule (244, 344) und einen auf der Säule (244, 344) angeordneten Kopf (246, 346) umfasst,
- wobei die erste Umlenkeinrichtung (216, 316) und/oder die zweite Umlenkeinrichtung (218, 318) dem Kopf (246, 346) angeordnet ist/sind.

6. Ladestation (200, 300) nach einem der vorherigen Ansprüche, **dadurch gekennzeichnet, dass**
- das mindestens eine Gewichtselement (224, 324) zumindest in Abhängigkeit der Anzahl von Umlenkeinrichtung dimensioniert ist,
- wobei insbesondere das mindestens eine Gewichtselement (224, 324) umso schwerer ist, desto größer die Anzahl von Umlenkeinrichtungen (216, 218, 220, 316, 318, 320.1, 320.2, 356) ist.

7. Ladestation (200, 300) nach einem der vorherigen Ansprüche, **dadurch gekennzeichnet, dass** in einem benutzten Zustand eines Ladekabels (234, 238, 334, 338) das Seil (204, 304) zumindest teilweise derart ausgezogen ist, dass ein Ladeanschluss (236, 240, 336, 340) des Ladekabels (234, 238, 334, 338) mit einem weiteren Ladeanschluss des zu ladenden Elektrofahrzeugs verbunden werden kann.

## Claims

1. Charging station (200, 300) for electric vehicles, comprising:
- a cable holding device (202, 302) having a cord (204, 304) led over a first deflection device (216, 316) and a second deflection device (218, 318),
- **characterized in that** two charging cables (234, 238, 334, 338) are held by the two ends (206, 208, 306, 308) of the cord, wherein the first end (206, 306) of the cord (204, 304) is connected to a first charging cable (234, 334) of the charging station (200, 300), and the further end (208, 308) of the cord (204, 304) is connected to a further charging cable (238, 338) of the charging station (200, 300), and
- a weight element (224, 324), which is operatively connected to the cord (204, 304) in such a manner that when the charging cable (234, 238, 334, 338) is not being used, the charging cable (234, 238, 334, 338) can be held such that there is a distance between a ground surface (228, 328) and every part of the charging cable (234, 238, 334, 338),
- wherein the cord (204, 304) is led over at least a third deflection device (220, 320) arranged between the first deflection device (216, 316) and the second deflection device (218, 318),
- wherein the at least one weight element (224, 324) is fastened to the third deflection device (220, 320) .

2. Charging station (200, 300) according to Claim 1, **characterized in that**
- the cord (204, 304) extends from the first end (206, 306) over the first deflection device (216, 316), the third deflection device (220, 320.1, 320.2) and the second deflection device (218, 318) to the further end (208, 308),
- wherein in particular the cord (204, 304) is led over the first deflection device (216, 316) and the second deflection device (218, 318), in each case in the direction of the ground surface (228, 328).

3. Charging station (200, 300) according to Claim 1 or 2, **characterized in that**
- at least one further third deflection device (320.1, 320.2) and at least one fourth deflection device (356) are provided for at least one further deflection of the cord (204, 304),
- wherein the fourth deflection device (356) is spaced apart vertically from the third deflection devices (320.1, 320.2).

4. Charging station (200, 300) according to one of the preceding claims, **characterized in that** the cord (204, 304) and the at least two deflection devices (216, 218, 220, 316, 318, 320.1, 320.2, 356) form a block-and-tackle system.

5. Charging station (200, 300) according to one of the preceding claims, **characterized in that**
- the charging station (200, 300) comprises a foundation (242, 342), a pillar (244, 344) arranged on the foundation (242, 342) and a head (246, 346) arranged on the pillar (244, 344),
- wherein the first deflection device (216, 316) and/or the second deflection device (218, 318) is/are arranged in the head (246, 346).

6. Charging station (200, 300) according to one of the preceding claims, **characterized in that**
- the at least one weight element (224, 324) is dimensioned at least on the basis of the number of deflection devices,
- wherein in particular the at least one weight element (224, 324) is heavier, the greater the number of deflection devices (216, 218, 220, 316, 318, 320.1, 320.2, 356).

7. Charging station (200, 300) according to one of the preceding claims, **characterized in that** when a charging cable (234, 238, 334, 338) is being used, the cord (204, 304) is at least partly pulled out in such a manner that a charging connection (236, 240, 336, 340) of the charging cable (234, 238, 334, 338) can be connected to a further charging connection of the electric vehicle to be charged.

## Revendications

1. Station de charge (200, 300) pour véhicules électriques, comprenant :
- un dispositif de maintien de câble (202, 302) avec une corde (204, 304) guidée sur un premier dispositif de renvoi (216, 316) et un deuxième dispositif de renvoi (218, 318),
- **caractérisée en ce que** deux câbles de charge (234, 238, 334, 338) sont maintenus par les deux extrémités (206, 208, 306, 308) de la corde, la première extrémité (206, 306) de la corde (204, 304) étant reliée à un premier câble de charge (234, 334) de la station de charge (200, 300), et l'autre extrémité (208, 308) de la corde (204, 304) étant reliée à un autre câble de charge (238, 338) de la station de charge (200, 300), et
- un élément de poids (224, 324) en liaison active avec la corde (204, 304) de telle sorte que les câbles de charge (234, 238, 334, 338) sont maintenus dans un état inutilisé des câbles de charge (234, 238, 334, 338) de manière à ce qu'il existe un espace entre une surface du sol (228, 328) et chaque partie des câbles de charge (234, 238, 334, 338),
- la corde (204, 304) étant guidée sur au moins un troisième dispositif de renvoi (220, 320) agencé entre le premier dispositif de renvoi (216, 316) et le deuxième dispositif de renvoi (218, 318),
- l'au moins un élément de poids (224, 324) étant fixé au troisième dispositif de renvoi (220, 320).

2. Station de charge (200, 300) selon la revendication 1, **caractérisée en ce que**
- la corde (204, 304) s'étend de la première extrémité (206, 306) à l'autre extrémité (208, 308) en passant par le premier dispositif de renvoi (216, 316), le troisième dispositif de renvoi (220, 320.1, 320.2) et le deuxième dispositif de renvoi (218, 318),
- la corde (204, 304) étant notamment guidée sur le premier dispositif de renvoi (216, 316) et le deuxième dispositif de renvoi (218, 318) respectivement en direction de la surface du sol (228, 328).

3. Station de charge (200, 300) selon la revendication 1 ou 2, **caractérisée en ce que**
- au moins un troisième dispositif de renvoi supplémentaire (320.1, 320.2) et au moins un quatrième dispositif de renvoi (356) sont prévus pour au moins un renvoi supplémentaire de la corde (204, 304),
- le quatrième dispositif de renvoi (356) étant espacé verticalement des troisièmes dispositifs de renvoi (320.1, 320.2).

4. Station de charge (200, 300) selon l'une quelconque des revendications précédentes, **caractérisée en ce que** la corde (204, 304) et les au moins deux dispositifs de renvoi (216, 218, 220, 316, 318, 320.1, 320.2, 356) forment un système de palan.

5. Station de charge (200, 300) selon l'une quelconque des revendications précédentes, **caractérisée en ce que**
- la station de charge (200, 300) comprend une fondation (242, 342), une colonne (244, 344) agencée sur la fondation (242, 342) et une tête (246, 346) agencée sur la colonne (244, 344),
- le premier dispositif de renvoi (216, 316) et/ou le deuxième dispositif de renvoi (218, 318) étant agencés sur la tête (246, 346).

6. Station de charge (200, 300) selon l'une quelconque des revendications précédentes, **caractérisée en ce que**
- l'au moins un élément de poids (224, 324) est dimensionné au moins en fonction du nombre de dispositifs de renvoi,
- l'au moins un élément de poids (224, 324) étant notamment d'autant plus lourd que le nombre de dispositifs de renvoi (216, 218, 220, 316, 318, 320.1, 320.2, 356) est grand.

7. Station de charge (200, 300) selon l'une quelconque des revendications précédentes, **caractérisée en ce que,** dans un état utilisé d'un câble de charge (234, 238, 334, 338), la corde (204, 304) est au moins partiellement étirée de telle sorte qu'une borne de charge (236, 240, 336, 340) du câble de charge (234, 238, 334, 338) peut être connectée à une autre borne de charge du véhicule électrique à charger.
